# EUROPÄISCHE PATENTSCHRIFT

(11) **EP 3 271 757 B1**
(45) Veröffentlichungstag und Bekanntmachung des Hinweises auf die Patenterteilung: **22.12.2021**
(21) Anmeldenummer: 16716478.9
(22) Anmeldetag: 15.03.2016
(51) Int. Cl.: G02B 3/08, F21V 5/04, G02B 19/00

(54) **OPTISCHES ELEMENT ZUR BEEINFLUSSUNG DER LICHTABGABE VON LEUCHTMITTELN**
OPTICAL ELEMENT FOR INFLUENCING THE LIGHT EMISSION OF ILLUMINANTS
ÉLÉMENT OPTIQUE DESTINÉ À INFLUER SUR LA QUANTITÉ DE LUMIÈRE ÉMISE PAR DES SOURCES LUMINEUSES

(30) Priorität: 16.03.2015 DE 102015204665
(43) Veröffentlichungstag der Anmeldung: 24.01.2018
(73) Patentinhaber: Zumtobel Lighting GmbH, 6850 Dornbirn (AT)
(72) Erfinder: EBNER, Stephan, 6850 Dornbirn (AT); SCHWÄRZLER, Erich, 6941 Langenegg (AT)
(74) Vertreter: Thun, Clemens
(86) Internationale Anmeldenummer: PCT/EP2016/055530
(87) Internationale Veröffentlichungsnummer: WO 2016/146622

(56) Entgegenhaltungen:
- WO-A1-2011/016300
- DE-A1-102009 020 593
- DE-A1-102013 202 563
- DE-A1-102013 204 476

## Beschreibung

Die vorliegende Erfindung betrifft ein optisches Element gemäß dem Oberbegriff des Anspruchs 1, welches zur Beeinflussung der Lichtabgabe von Leuchtmitteln vorgesehen ist und aus einem lichtdurchlässigen Material besteht, wobei das Element ein Oberflächenbereich aufweist, der als lichtbrechende Lichteintrittsfläche oder Lichtaustrittsfläche des optischen Element dient und der eine nicht-ebene, lichtlenkende Geometrie aufweist. Insbesondere betrifft die vorliegende Erfindung ein optisches Element zur Beeinflussung der Lichtabgabe einer oder mehrerer LEDs, eine Anordnung zur Lichtabgabe sowie ein Verfahren zum Herstellen eines derartigen optischen Elements.

Leuchtmittel im Allgemeinen, insbesondere jedoch LEDs benötigen zum Anpassen der Lichtabgabe an eine gewünschte Lichtabstrahlcharakteristik optische Systeme, mit deren Hilfe das von den Leuchtmitteln abgegebene Licht in eine gewünschte Richtung gelenkt wird. Derartige optische Systeme sind, wie bereits erwähnt, insbesondere bei der Nutzung von LEDs als Lichtquellen erforderlich, da LEDs Licht in einen sehr breiten Winkelbereich abstrahlen, üblicherweise jedoch lediglich eine Lichtabgabe innerhalb eines definierten Bereichs gewünscht ist. Dabei haben sich insbesondere Linsensysteme als vorteilhaft herausgestellt, welche das Licht über physikalische Brechungseigenschaften in die gewünschte Richtung lenken.

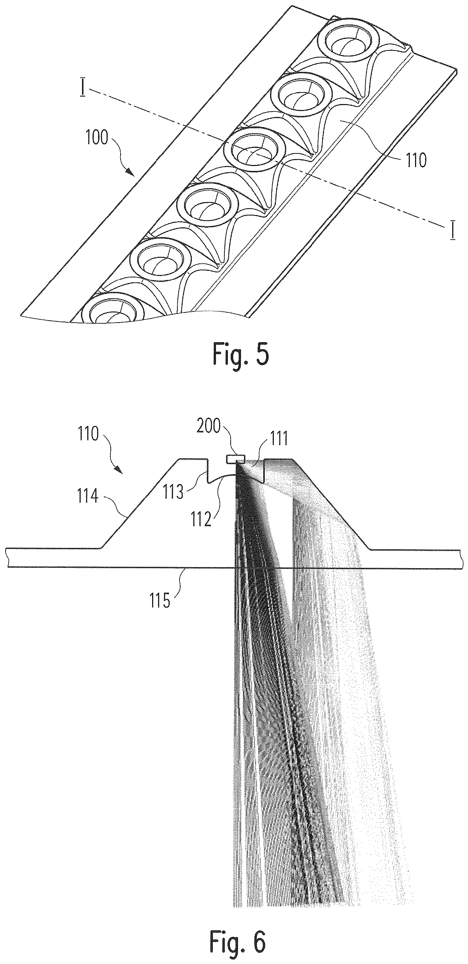

Ein aus dem Stand der Technik bekanntes optisches Element, welches dazu vorgesehen ist, das Licht einer Mehrzahl von in Längsrichtung hintereinander angeordneten LEDs zu beeinflussen, ist in den Figuren 5 und 6 dargestellt, wobei Figur 6 etwa einer Schnittdarstellung entlang der Linie I-I von Figur 5 entspricht.

Das in Figur 5 gezeigte, allgemein mit dem Bezugszeichen 100 versehene optische Element besteht dabei aus einer Mehrzahl von hintereinander angeordneten Linsenkörpern 110, denen jeweils eine LED oder ein LED-Cluster, bestehend bspw. aus drei LEDs in den Farben rot, grün und blau zugeordnet ist. Jeder Linsenkörper 110 ist dabei gleichartig ausgebildet und weist entsprechend der Schnittdarstellung von Figur 6 in etwa eine Kegelstumpfform auf, wobei der LED 200 eine Ausnehmung 111 zugewandt ist, deren Bodenfläche 112 und Umfangsfläche 113 den Lichteintrittsbereich für das Licht der LED 200 bilden. An der gegenüberliegenden Seite dieser Ausnehmung 111 befindet sich die Lichtabstrahlfläche 115, welche über die umlaufende Mantelfläche 114 mit dem Lichteintrittsbereich verbunden ist. Auch komplexere Linsensysteme mit z.B. einem Strahlteiler oder mehrstufig ausgebildete optische Systeme sind denkbar.

Die Wirkungsweise dieser an sich bereits bekannten Optik kann anhand des Strahlenverlaufs, der in Figur 6 schematisch angedeutet ist, nachvollzogen werden.

Dabei ist erkennbar, dass ein Teil des von der LED 200 abgegebenen Lichts über die gewölbte Bodenfläche 112 der Ausnehmung 111 in den Linsenkörper 110 eintritt. Dieses Licht wird beim Übergang in den Linsenkörper 110 mehr oder weniger stark gebrochen, trifft dann im nächsten Schritt auf die Lichtaustrittsfläche 115 und wird über diese zur Unterseite hin abgegeben. Licht hingegen, welches eher seitlich von der LED 200 abgegeben wird, tritt über die Umfangsfläche 113 der Ausnehmung 111 in den Linsenkörper 110 ein, derart, dass es von der Innenseite her auf die Mantelfläche 114 des Linsenkörpers trifft. Die Form des Linsenkörpers 110 ist derart ausgeführt, dass diese Lichtstrahlen an der Mantelfläche 114 total-reflektiert werden. Sie werden hierbei wiederum zur Unterseite hin derart abgelenkt, dass sie den Linsenkörper 110 über dessen Bodenfläche 115 verlassen können.

Derartige Optiken bzw. Linsen sind wie bereits erwähnt aus dem Stand der Technik bekannt und haben sich vielfach bewährt, da das Licht, welches von der LED 200 in unterschiedlichste Richtungen abgegeben wird, trotz allem nahezu vollständig genutzt und effizient über die Lichtaustrittsfläche, die durch die Bodenfläche 115 gebildet wird, abgegeben werden kann. Dementsprechend weisen derartige Optiken also eine hohe Effizienz auf.

Üblicherweise werden derartige Linsensysteme aus einem glasklaren Material, insbesondere aus Kunststoff gebildet. Dabei hat sich als problematisch herausgestellt, dass mit Hilfe derartiger Linsen das LED-Licht zwar effizient gebündelt und zur Unterseite hin abgegeben werden kann, allerdings das über die Bodenfläche 112 in den Linsenkörper 110 eintretende Licht einerseits und das an der Mantelfläche 114 total-reflektierte Licht andererseits nicht vollständig überlagert werden. Wie Figur 6 erkennen lässt, wird dabei auf einer zu beleuchtenden Fläche der zentrale Bereich eher durch das Licht beleuchtet, welches von der LED 200 nach unten abgegeben wird und damit über die Bodenfläche 112 der Ausnehmung 111 in den Linsenkörper 110 eintritt, während hingegen Randbereiche des Beleuchtungsfelds durch das total-reflektierte, also von der LED 200 eher seitlich abgegebenen Licht beleuchtet werden. Da LEDs hinsichtlich der Wellenlänge des abgegebenen Lichts eine gewisse Winkelabhängigkeit aufweisen, also bspw. Licht einer längeren Wellenlänge eher seitlich abgegeben wird, hat dies zur Folge, dass im Beleuchtungsfeld Inhomogenitäten, insbesondere helle Stellen bzw. Helligkeitsübergänge und/oder farbliche Unregelmäßigkeiten entstehen können. Diese werden als unschön bzw. störend wahrgenommen und sollten vermieden werden.

Um das Erscheinungsbild hinsichtlich einer gleichmäßigen Ausleuchtung zu verbessern, ist dementsprechend bei den in den Figuren 5 und 6 dargestellten Linsensystemen bereits bekannt, die unschönen und störenden Abbildungen durch diffus-streuende Bereiche zu kaschieren. Hierbei wird die Lichtaustrittsfläche 115 der Optik wird mit einer leicht streuenden Struktur versehen, um die oben beschriebenen Unregelmäßigkeiten auszugleichen.

Das Einbringen dieser Streustrukturen erfolgt dabei durch ein entsprechendes Aufrauen der Oberfläche, wobei genau genommen nicht das optische Element selbst bearbeitet wird sondern stattdessen das üblicherweise zum Herstellen des optischen Elements vorgesehene Spritzgießwerkzeug. In diesem Fall wird diejenige Fläche des Werkzeugs, welche später für die Ausgestaltung der Lichtaustrittsfläche verantwortlich ist, mit einer entsprechenden Oberflächenrauigkeit versehen, die dann auf die Lichtaustrittsfläche der Linse übertragen wird.

Durch derartige Maßnahmen kann zwar das Erscheinungsbild im Vergleich zu einer perfekt planen Lichtaustrittsfläche des Linsenkörpers verbessert werden, allerdings führen diese Streustrukturen aufgrund der hiermit zwangsläufig verbunden Unregelmäßigkeiten und Unstetigkeiten in der Oberfläche zu Störungen, die dazu führen, dass Licht zumindest teilweise undefiniert in ungewünschte Richtungen abgegeben wird. Dies führt letztendlich zu teilweisen Verlusten in der Lichtabgabe bis hin zu einem störenden Blenden durch die gesamte LED-Leuchte. Auch werden durch die Streustrukturen die Möglichkeiten, die Lichtabgabe gezielt zu beeinflussen, beschränkt.

Als alternative Maßnahme ist deshalb bekannt, die Lichtaustrittsfläche der Linse mit einer lichtlenkenden, nicht-ebenen Geometrie zu versehen, durch welche die Lichtabstrahleigenschaften der Linse zusätzlich beeinflusst wird. Beispielsweise ist es im Stand der Technik üblich, Lichtaustrittsflächen von optischen Elementen mit Prismenstrukturen zu versehen, welche ebenfalls eine Vergleichmäßigung der Lichtabgabe sowie ggf. ein Bündeln des Lichts auf einen bestimmten Winkelbereich bewirken sollen. Auch diese Geometrien sind allerdings hinsichtlich ihrer Wirkungsweise beschränkt oder weisen wiederum Kanten und dergleichen auf, an denen unkontrollierte Streuungen des Lichts auftreten.

In DE 10 2013 204 476 A1 wird ein optisches Element und ein optoelektronisches Bauelement mit einem optischen Element beschrieben. Hierbei weist das optische Element eine erste und eine zweite Oberfläche auf, wobei an der ersten Oberfläche eine Zahnstruktur mit einer Mehrzahl in eine zweite Richtung orientierter Zähne angeordnet ist. An der zweiten Oberfläche ist eine Stufenlinsenstruktur mit einer Mehrzahl in eine erste Richtung orientierter Stufen angeordnet.

Die DE 10 2009 020593 A1 zeigt einen zur Erzeugung einer definierten Overhead-Beleuchtung eingerichteten Fahrzeugscheinwerfer. Der Fahrzeugscheinwerfer weist eine Abbildungsoptik auf, die dazu eingerichtet ist, eine Kante, die einen Lichtstrom einer Lichtquelle des Fahrzeugscheinwerfers begrenzt, als Hell-Dunkel-Grenze in das Vorfeld des Fahrzeugscheinwerfers zu projizieren, wobei eine Grenzfläche einer Komponente der Abbildungsoptik, durch die der Lichtstrom hindurchtritt, ein Overhead-Element in Form einer lokalen Deformation der Grenzfläche mit einer prismatischen Wirkung aufweist, durch die Licht in einen über der Hell-Dunkel-Grenze liegenden Overhead-Bereich abgelenkt wird. Der Fahrzeugscheinwerfer zeichnet sich dadurch aus, dass die Grenzfläche mehr als hundert diskret über die Grenzfläche verteilte Overhead-Elemente aufweist.

Der vorliegenden Erfindung liegt deshalb die Aufgabenstellung zugrunde, bei optischen Elementen zur Beeinflussung der Lichtabgabe von Leuchtmitteln die oben beschriebenen Nachteile zu vermeiden.

Die Aufgabe wird durch ein optisches Element zur Beeinflussung der Lichtabgabe von Leuchtmitteln, welches die Merkmale des Anspruchs 1 aufweist, gelöst. Vorteilhafte Weiterbildungen der Erfindung sind Gegenstand der abhängigen Ansprüche.

Die erfindungsgemäße Lösung beruht auf dem Gedanken, den lichtbrechenden Oberflächenbereich des optischen Elements zusätzlich zu einer lichtlenkenden Geometrie mit einer Struktur zu versehen, welche der lichtlenkenden Geometrie überlagert ist bzw. folgt und durch thermisches Umformen des optischen Elements selbst oder eines zur Herstellung des optischen Elements verwendeten Werkzeugs mit entsprechender Formgebung, also z.B. eines Spritzgießwerkzeugs erstellt wurde. Im Gegensatz zu der ursprünglichen Oberflächenform mit der lichtlenkenden Geometrie, die bspw. durch mechanisches Bearbeiten des optischen Elements selbst, insbesondere jedoch durch entsprechendes Gestalten des Spritzgießwerkzeugs erstellt wird, wird also diese zusätzliche Struktur in einer sehr speziellen Art und Weise erstellt, die letztendlich dazu führt, dass die Lichtabgabe durch das optische Element nochmals deutlich besser und effizienter beeinflusst werden kann. Mit Hilfe des thermischen Bearbeitens wird nämlich letztendlich eine Oberfläche geschaffen, welche stetig, also ohne undefinierte Sprünge, Kanten oder dergleichen ausgestaltet ist. Dies führt letztendlich dazu, dass bspw. die angestrebte Vergleichmäßigung, durch welche Inhomogenitäten in dem zu beleuchtenden Bereich vermieden werden, erzielt wird. Insbesondere jedoch können unkontrollierbare Streuungen des Lichts im Vergleich zu einer in herkömmlicher Weise erstellten Streustruktur weitestgehend vermieden werden.

Gemäß der vorliegenden Erfindung wird also ein optisches Element zur Beeinflussung der Lichtabgabe von Leuchtmitteln, insbesondere zu Beeinflussung der Lichtabgabe einer oder mehrere LEDs vorgeschlagen, wobei das optische Element aus einem lichtdurchlässigen Material besteht und zumindest einen Oberflächenbereich aufweist, der als lichtbrechende Lichteintrittsfläche oder Lichtaustrittsfläche des optischen Elements dient und der eine nicht-ebene, lichtlenkende Geometrie aufweist, und wobei erfindungsgemäß der Oberflächenbereich eine der lichtlenkenden Geometrie folgende Struktur aufweist, welche durch thermisches Bearbeiten, insbesondere durch thermisches Umformen, des optischen Elements oder eines zur Herstellung des optischen Elements verwendeten Werkzeugs mit entsprechender Formgebung, z.B. eines Spritzgießwerkzeugs erstellt wurde.

Ferner wird erfindungsgemäß ein Werkzeug mit entsprechender Formgebung zum Erstellen eines optischen Elements zur Beeinflussung der Lichtabgabe von Leuchtmitteln vorgeschlagen, insbesondere ein Spritzgießwerkzeug, wobei das Werkzeug einen Oberflächenbereich aufweist, der zum Bilden einer lichtbrechenden Lichteintrittsfläche oder Lichtaustrittsfläche des optischen Elements mit einer nicht-ebenen, lichtlenkenden Geometrie vorgesehen ist, und wobei der Oberflächenbereich des Werkzeugs mit einer dieser lichtlenkenden Geometrie folgenden Struktur versehen ist, welche durch thermisches Bearbeiten, insbesondere durch thermisches Umformen des Werkzeugs erstellt wurde.

Darüber hinaus wird ein Verfahren zum Erstellen eines optischen Elements zur Beeinflussung der Lichtabgabe von Leuchtmitteln vorgeschlagen, wobei das optische Element aus einem lichtdurchlässigen Material besteht und zumindest einen Oberflächenbereich aufweist, der als lichtbrechende Lichteintrittsfläche oder Lichtaustrittsfläche des optischen Elements dient und der eine nicht-ebene, lichtlenkende Geometrie aufweist, und wobei erfindungsgemäß der Oberflächenbereich durch thermisches Umformen mit einer der lichtlenkenden Geometrie folgenden Struktur versehen wird.

Schließlich wird auch ein Verfahren zum Erstellen eines optischen Elements zur Beeinflussung der Lichtabgabe von Leuchtmitteln vorgeschlagen, wobei das optische Element aus einem lichtdurchlässigen Material besteht und zumindest einen Oberflächenbereich aufweist, der als lichtbrechende Lichteintrittsfläche oder Lichtaustrittsfläche des optischen Elements dient und der eine nicht-ebene, lichtlenkende Geometrie aufweist, und wobei das optische Element durch Spritzgießen erstellt wird und die dem Oberflächenbereich entsprechende Oberfläche des Spritzgießwerkzeugs mit einer der lichtlenkenden Geometrie folgenden Struktur versehen ist, welche durch thermisches Bearbeiten, insbesondere durch thermisches Umformen erstellt wurde.

Die maßgeblichen optischen Eigenschaften des erfindungsgemäßen optischen Elements werden nach wie vor in erster Linie durch die lichtlenkende Geometrie der lichtbrechenden Fläche vorgegeben, mit Hilfe der zusätzlich aufgebrachten Struktur, deren Größenordnung deutlich unterhalb derjenigen der lichtlenkenden Geometrie liegt, kann jedoch die Lichtabgabe zusätzlich optimiert werden. Wie nachfolgend noch näher beschrieben wird, kann dabei diese zusätzliche Struktur derart ausgeführt sein, dass sie die globalen Lichtabgabeeigenschaften der lichtlenkenden Geometrie überhaupt nicht beeinflusst sondern lediglich eine gleichmäßigere Lichtabgabe bewirkt, es besteht allerdings auch die Möglichkeit, diese zusätzliche Geometrie derart zu gestalten, dass die Abstrahleigenschaften des optischen Elements gezielt leicht modifiziert werden.

Das thermische Bearbeiten des optischen Elements, insbesondere jedoch des zur Herstellung verwendeten Werkzeugs erfolgt vorzugsweise mit Hilfe eines Lasers. Entsprechende Bearbeitungsverfahren von Oberflächen sind bereits aus dem Stand der Technik bekannt, wurden bislang jedoch nicht zur Bearbeitung optischer Elemente, insbesondere nicht zur Bearbeitung der lichtbrechenden Oberflächen optischer Elemente eingesetzt. Es hat sich nunmehr jedoch gezeigt, dass mit Hilfe dieser Verfahren äußerst effizient die lichtbrechenden Flächen von optischen Elementen in gewünschter Weise gestaltet werden können.

Erfindungsgemäß weist die Struktur des Oberflächenbereichs zumindest im Bereich einer ersten Richtung eine stetige wellenartige bzw. periodische Form auf. Auch ein Überlagern zweier stetiger wellenartiger Strukturen, welche insbesondere im Wesentlichen senkrecht zueinander ausgerichtet sind, wäre denkbar, wobei grundsätzlich hinsichtlich der Ausgestaltung der Struktur keine Beschränkungen bestehen. Das thermische Bearbeiten des Spritzgießwerkzeugs erlaubt dabei, Strukturen zu erstellen, deren Wellenlänge im Bereich von wenigen bis einigen Mikrometern, typisch etwa 50-500µm liegt. Auch kleinere oder größere Wellenlängen wären realisierbar, wobei in diesem Fall allerdings dann die gewünschte streuende Funktion der Struktur wiederum zu- bzw. abnimmt. Die Erhebungen der wellenartigen Strukturen liegt dabei erfindungsgemäß im Bereich von wenigen Mikrometern, typisch etwa 5-100µm. Strukturen in derartigen Größenordnungen wären durch mechanische Bearbeitung von Oberflächen in einer entsprechenden Genauigkeit nicht möglich. Stattdessen würden hierbei immer Unregelmäßigkeiten bzw. Sprünge entstehen, die jedoch mit der erfindungsgemäßen Lösung vermieden werden.

Zur Klarstellung ist hier darauf hinzuweisen, dass die mit Hilfe der erfindungsgemäßen Lösung realisierte Struktur zwar als Streustruktur bezeichnet wird, da sie nach wie vor u.a. die oben erwähnte Aufgabe der beim Stand der Technik genutzten Streustruktur erfüllen soll, nämlich eine Vergleichmäßigung der Lichtabgabe zu erzielen, allerdings im erfindungsgemäßen Fall keine klassische diffuse Streuung, als kein statistisches Ablenken der Lichtstrahlen erfolgt. Stattdessen zeichnet sich die erfindungsgemäße Lösung dadurch aus, dass aufgrund der damit erzielbaren stetigen und differenzierbaren Oberflächengestaltung eine sehr gut kontrollierbare Beeinflussung der Lichtstrahlen durch Brechung erfolgen kann.

Das erfindungsgemäße optische Element besteht vorzugsweise aus einem glasklaren Kunststoff-Material (alternativ hierzu wären auch Glas oder Silikon denkbar), wobei ferner vorzugsweise die Struktur auf der gesamten Lichtaustrittsfläche des optischen Elements ausgebildet ist.

Es kann sich bei dem erfindungsgemäßen optischen Element insbesondere um eine Linse handeln, besonders bevorzugt um eine Linse, die in ihrer grundsätzlichen Struktur derjenigen entspricht, wie sie in den Figuren 5 und 6 dargestellt ist, also aus dem Stand der Technik bekannt ist. Allerdings ist das erfindungsgemäße Konzept deutlich flexibler einsetzbar und kann auch bei anderen optischen Elementen zum Einsatz kommen.

Nachfolgend soll die Erfindung anhand der beiliegenden Zeichnung näher erläutert werden. Es zeigen:
- Figuren 1a bis 1c: Darstellungen zur Wirkungsweise der erfindungsgemäß zusätzlich aufgebrachten Struktur auf einer lichtlenkenden Oberfläche einer bi-konvexen Linse;
- Figur 2: ein zweites Ausführungsbeispiel einer erfindungsgemäß ausgestalteten Linse, deren Lichtaustrittsfläche zumindest abschnittsweise mit einer zusätzlichen Struktur versehen ist;
- Figur 3: ein drittes Ausführungsbeispiel einer Linse, deren Lichteintrittsfläche erfindungsgemäß mit einer zusätzlichen Struktur versehen ist;
- Figuren 4a bis 4c: eine weitere Möglichkeit zur Gestaltung der Lichtaustrittsfläche einer Linse gemäß der vorliegenden Erfindung und
- Figuren 5 und 6: ein aus dem Stand der Technik bekanntes optisches Element.

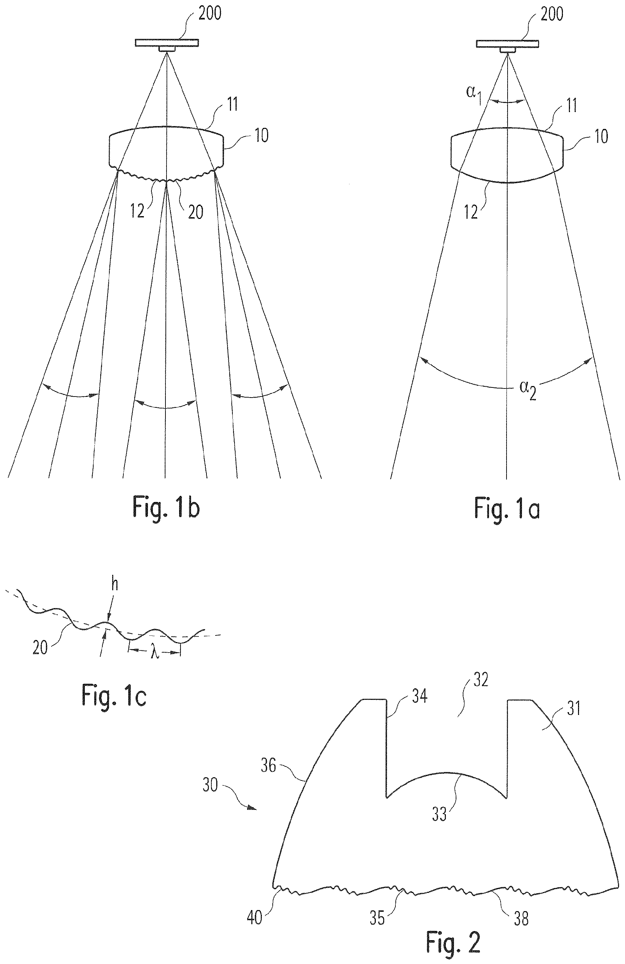

Anhand eines sehr einfachen Beispiels, welches in den Figuren 1a bis 1c gezeigt ist, soll zunächst die Wirkungsweise der erfindungsgemäßen zusätzlichen Strukturierung erläutert werden. Grundsätzlich ist allerdings das erfindungsgemäße Konzept der Strukturierung einer lichtbrechenden Oberfläche eines optischen Elements mittels thermischer Bearbeitung auf alle Arten von optischen Elementen anwendbar.

Figur 1a zeigt hierbei zunächst in Schnittdarstellung die Wirkungsweise einer entsprechend dem Stand der Technik ausgebildeten, also noch nicht mit der erfindungsgemäßen Struktur versehenen Linse 10. Die Linse 10 ist hierbei dazu vorgesehen, die Abgabe des Lichts, welches von einer LED 200 emittiert wird, zu beeinflussen. Sie besteht aus einem glasklaren Material und weist zwei gekrümmte lichtbrechende Flächen auf, zum einen die der LED 200 zugewandte Lichteintrittsfläche 11 und zum anderen die der LED 200 abgewandte Lichtaustrittsfläche 12. Beide Flächen 11 und 12 sind im vorliegenden Fall konvex ausgeführt, also jeweils nach außen gekrümmt. Hierdurch ergibt sich ein Einfluss auf das von der Lichtquelle 200 abgegebene Strahlenbündel, der anhand der beiden schematisch darstellten äußeren Strahlenverläufe erkennbar ist. Beim Eintritt in die Linse 10 über die Lichteintrittsfläche 11 sowie beim anschließenden Austritt über die Lichtaustrittsfläche 12 werden die Lichtstrahlen also gebrochen, wobei im vorliegenden Fall insbesondere hierdurch der resultierende Öffnungswinkel α₂ des Strahlenbündels im Vergleich zum ursprünglichen Öffnungswinkel α₁ reduziert wird. Mit Hilfe der dargestellten Linse 10 wird also das Licht leicht gebündelt.

Für den Fall, dass beide lichtbrechenden Flächen 11 und 12, insbesondere jedoch die Lichtaustrittsfläche 12 abgesehen von der konvexen Krümmung eine glatte Oberfläche aufweisen, ergibt sich wiederum das bereits anhand von Figur 6 erläuterte Problem, dass nämlich in einem von dem Strahlenbündel beleuchteten Bereich Inhomogenitäten auftreten können, die darauf zurückzuführen sind, dass die Abgabe des Lichts durch die LED 200 innerhalb des Strahlenbündels nicht in alle Richtungen gleich ist und insbesondere auch eine Winkelabhängigkeit der Wellenlänge des abgegebenen Lichts vorliegen kann.

Im Vergleich zu der in Figur la dargestellten, entsprechend dem Stand der Technik ausgebildeten Linse 10 ist deshalb die in Figur 1b dargestellte Linse 10 an ihrer Lichtaustrittsfläche 12 erfindungsgemäß zusätzlich mit einer der konvexen Krümmung folgenden Struktur 20 versehen, die abschnittsweise vergrößert in Figur 1c dargestellt ist. Im dargestellten Ausführungsbeispiel weist diese Streustruktur 20 also einen etwa wellenartigen Verlauf auf, der der lichtbrechenden Geometrie, also der gestrichelt dargestellten ursprünglichen konvexen Krümmung folgt und der in der nachfolgend beschriebenen Weise erzielt wurde.

Erfindungsgemäß ist nämlich vorgesehen, dass die Streustruktur 20 in einer speziellen Art und Weise definiert erstellt wird, die sicherstellt, dass die Streustruktur 20 stetig, genau genommen sogar stetig und differenzierbar ausgebildet ist. D.h., die erfindungsgemäße Struktur 20 weist weder Sprünge noch Knicke oder Kanten auf, durch welche ungewollte Lichtstreuungen entstehen könnten. Stattdessen kann - wie nachfolgend näher erläutert - durch die Struktur 20 das von der Linse 10 insgesamt abgegebene Licht definiert und äußerst effizient in gewünschter Weise beeinflusst werden, um eine gewünschte Lichtabgabe zu erzielen.

Die Streustruktur 20 wird also nicht durch ein mechanisches Bearbeiten der Linse oder des zur Herstellung genutzten vorzugsweise Spritzgießwerkzeugs erzielt, sondern dadurch erhalten, dass z.B. die Lichtaustrittsfläche 12 der Linse 10, vorzugsweise jedoch das zum Herstellen der Linse 10 genutzte Spritzgießwerkzeug thermisch bearbeitet wird. Da eine thermische Bearbeitung des Spritzgießwerkzeugs - oder auch eines anderen zur Herstellung des optischen Elements genutzten Werkzeugs mit entsprechender Formgebung - zur Folge hat, dass die damit hergestellten Linsen nicht mehr einzeln nachträglich bearbeitet werden müssen, um die Streustruktur 20 zu erzielen, ist selbstverständlich ein Einbringen der komplementären Streustruktur in die Oberfläche des Werkzeugs zu bevorzugen. Grundsätzlich könnte das beschriebene Prinzip allerdings auch unmittelbar auf das optische Element angewendet werden.

Im Rahmen der thermischen Behandlung findet also kein abhebendes mechanisches Bearbeiten oder anderweitiges Strukturieren bspw. durch fotochemisches Ätzen statt, sondern es wird lediglich ein Umformen der Oberfläche vorgenommen. Dieses Strukturieren erfolgt dabei vorzugsweise mit Hilfe von Laserstrahlung, wobei hierbei kein Material der Werkzeugoberfläche abgetragen wird, sondern stattdessen im schmelzflüssigen Zustand durch eine Modulation des Schmelzbadvolumens das Material umverteilt wird. Dabei ist es möglich, durch entsprechendes Modulieren der Laserleistung das Schmelzbadvolumen gezielt zu beeinflussen und damit auch die Oberflächenstruktur in gewünschter Weise zu formen. Der Vorteil dieser Vorgehensweise besteht dabei darin, dass das Material des Spritzgießwerkzeugs - oder ggf. auch des optischen Elements - nach der thermischen Bearbeitung direkt aus der Schmelze heraus erstarrt, so dass abgesehen von der gezielt eingebrachten Strukturierung eine gleichmäßige, im Prinzip vernachlässigbare Rauheit erzielt wird. Die Oberfläche des Werkzeugs wird also einerseits in gewünschter Weise strukturiert, andererseits im Prinzip gleichzeitig poliert, so dass tatsächlich im Rahmen der gewünschten Größenordnung eine nahezu ideal stetige und differenzierbare Oberflächenstruktur geschaffen wird. Dabei könnte im Prinzip auch alternativ zur Nutzung des Laserstrahls eine anderweitige thermische Bearbeitung der Oberfläche vorgenommen werden, wesentlich ist, dass eben keine mechanische Bearbeitung erfolgt, sondern durch gezieltes Einbringen von Wärme die Oberfläche umgeformt wird.

In einer einfachen Form kann also mit Hilfe der erfindungsgemäßen Vorgehensweise die Lichtaustrittsfläche 12 der Linse 10 mit einer Wellenform versehen werden, wie sie in der Schnittdarstellung von Figur 1c erkennbar ist. Die Wellenstruktur 20, die im dargestellten Ausführungsbeispiel in etwa einer Sinusform folgt, grundsätzlich jedoch jegliche Form annehmen kann, die durch eine mathematische Gleichung beschreibbar ist, kann dabei bspw. entlang einer Richtung wellenförmig ausgebildet sein, in einer Richtung senkrecht hierzu jedoch translationsinvariant sein, so dass im Prinzip die konvex gekrümmte Lichtaustrittsfläche 12 mit in Längsrichtung verlaufenden alternierenden Erhebungen und Vertiefungen ausgebildet ist. Denkbar wäre allerdings auch in gleicher Weise, zwei Wellenstrukturen, die senkrecht zueinander ausgerichtet sind, zu überlagern, so dass sich letztendlich eine eher matrixartig ausgebildete Struktur von Erhebungen und Senken ergibt. Die Strukturierung der Lichtaustrittsfläche 12 bzw. allgemein der lichtbrechenden Fläche der Optik kann dabei die gesamte Fläche überlagern, denkbar wäre jedoch auch, gezielt nur einen Teilbereich bspw. der Lichtaustrittsfläche in gewünschter Weise zu strukturieren.

Eine denkbare Größenordnung der mit Hilfe der erfindungsgemäßen Vorgehensweise erzielbaren Struktur liegt dabei bspw. bei einer Wellenlänge λ, also einem Abstand zwischen zwei aufeinander folgenden Erhebungen, im Bereich von wenigen bis einigen Mikrometern, etwa 50-500µm. Die Höhe h der Erhebungen kann im Bereich von wenigen Mikrometern, etwa 5-100µm liegen, wobei grundsätzlich auch kleinere oder größere Werte denkbar wären, diese jedoch dann zum Erzielen des nachfolgend beschriebenen Einflusses auf die Lichtabgabe weniger effizient sind.

Die Wirkungsweise dieser Strukturierung 20 kann Figur 1b entnommen werden. Erkennbar ist hierbei, dass im Gegensatz zum Strahlenverlauf bei der Linse 10 gemäß Figur 1a nunmehr die die Linse 10 an der Lichtaustrittsfläche 12 verlassenden Strahlen nochmals zusätzlich leicht aufgeweitet werden. Aufgrund des Fehlens einer Rauheit der Oberfläche der Lichtaustrittsfläche 12 findet allerdings kein unkontrolliertes Streuen der die Linse 10 verlassenden Lichtstrahlen mehr statt, sondern die Strukturierung 20 führt letztendlich dazu, dass quasi eine Vielzahl von sehr kleinen, aber sehr präzise ausgebildeten linsenartigen Abschnitten erzielt wird, durch welche die einzelnen Strahlen kontrolliert aufgeweitet werden. Hierdurch wird der Verlust an unkontrolliertem Licht also nochmals deutlich reduziert. Gleichzeitig führt die Aufweitung der einzelnen Strahlenbündel zu einer besseren Durchmischung des Lichts auf einer - nach wie vor in erster Linie durch die Geometrie der Linse 10 festgelegten - zu beleuchtenden Oberfläche, was letztendlich dazu führt, dass die eingangs geschilderten Inhomogenitäten bei der Beleuchtung reduziert werden.

Das erfindungsgemäße Konzept ist dabei äußerst vielseitig einsetzbar, wie anhand der weiteren Ausführungsbeispiele deutlich wird.

So zeigt Figur 2 zunächst ein weiteres Ausführungsbeispiel, bei dem die Lichtaustrittsfläche einer Linse, die grundsätzlich in ihrem Aufbau der in den Figuren 5 und 6 gezeigten Linse entspricht, gemäß der vorliegenden Erfindung ausgebildet ist. Auch die erfindungsgemäße Linse 30 weist also einen etwa kegelstumpfartigen ausgestalteten Linsenkörper 31 - vorzugsweise bestehend aus glasklarem Material, z.B. Kunststoff oder aber auch Glas oder Silikon - auf, der an seiner der - nicht dargestellten - Lichtquelle zugewandten Seite eine Ausnehmung 32 aufweist, deren Bodenfläche 33 und Umfangsfläche 34 die Lichteintrittsflächen bilden. Wiederum wird derjenige Anteil des Lichts, der über die vorzugsweise leicht linsenartig, also gekrümmt ausgeführte Bodenfläche 33 der Ausnehmung 32 in den Linsenkörper 31 eintritt, derart gebrochen, dass er auf die Unterseite und damit die Lichtaustrittsfläche 35 des Linsenkörpers 31 trifft und hier austritt. Ein anderer Teil des Lichts hingegen, der über die Umfangsfläche 34 der Ausnehmung 32 in den Linsenkörper 31 eintritt, wird an der Mantelfläche 36 des Linsenkörpers 31 totalreflektiert und verlässt dann wiederum die Linse 30 über die Lichtaustrittsfläche 35.

Im vorliegenden Fall ist nunmehr vorgesehen, dass die Lichtaustrittsfläche 35 zusätzlich mit einer makroskopischen Geometrie in Form einer Prismenstruktur 38 versehen ist. Diese Prismenstruktur 38 kann z.B. entweder in Längsrichtung verlaufende, im Querschnitt dreieckförmige Prismen oder matrixartig angeordnete, pyramidenförmige Prismen aufweisen. Dieser Prismenstruktur 38 wird nunmehr jedoch wiederum erfindungsgemäß eine zusätzliche Streustruktur 40 überlagert, welche in der zuvor beschriebenen Art und Weise durch thermisches Umformen entweder der Linse 30 selbst, vorzugsweise jedoch des zum Herstellen der Linse 30 genutzten Werkzeugs erstellt wurde.

Dabei ist nicht zwingend erforderlich, dass die zusätzliche Streustruktur 40 die gesamte Lichtaustrittsfläche 35 und damit die Prismenstruktur 38 überdeckt. Denkbar wäre auch, lediglich einen Teil der Prismenstruktur 38, bspw. nur einen zentralen oder äußeren Bereich zusätzlich zu strukturieren. Auch wäre denkbar, wie in Figur 2 dargestellt lediglich die in eine Richtung weisenden Flanken der Prismenstruktur 38 zusätzlich mit der Streustruktur zu versehen. Eine derartige spezifische Überlagerung der makroskopischen Prismenstruktur 38 mit der Streustruktur 40 kann bspw. dann vorgesehen sein, wenn die Lichtabgabe insbesondere im Hinblick auf eine bestimmte seitliche Richtung zusätzlich optimiert werden soll.

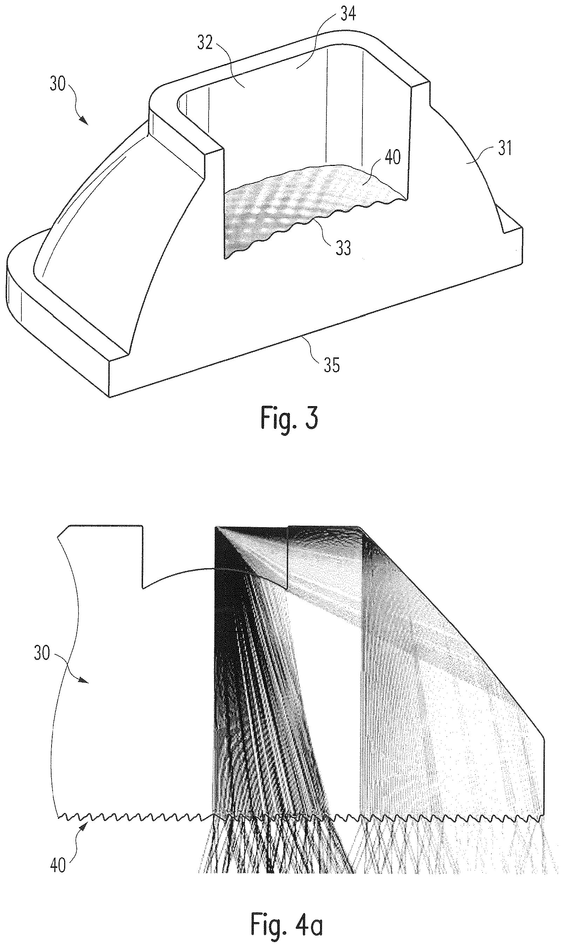

Ein weiteres Ausführungsbeispiel einer erfindungsgemäß ausgebildeten Linse 30 ist in Figur 3 gezeigt. Wiederum gleicht die Linse 30 hinsichtlich ihres grundsätzlichen Aufbaus der bereits aus dem Stand der Technik bekannten Linse bzw. der Linse gemäß Figur 2, weshalb im vorliegenden Fall gleiche Bezugszeichen für vergleichbare Komponenten gewählt wurden. Im dargestellten Beispiel ist nun allerdings vorgesehen, dass die Bodenfläche 33 der Ausnehmung 32 mit einer Streustruktur 40 versehen ist. Diese wurde durch zwei um 90° zueinander versetzt ausgerichtete wellenartige Strukturen gebildet, welche letztendlich zu der dargestellten matrixartigen Ausbildung von Erhöhungen und Senken führen. In diesem Fall wird das Licht also bereits beim Eintritt in den Linsenkörper 31 durch die Struktur 40 aufgeweitet, wobei auch hier letztendlich eine gleichmäßigere Beleuchtung erzielt werden kann.

Selbstverständlich wäre es auch denkbar, sowohl an der Lichteintrittsfläche als auch an der Lichtaustrittsfläche der Linse 30 entsprechende Streustrukturen vorzusehen. Erkennbar ist bei dem Ausführungsbeispiel gemäß Figur 3 jedoch wiederum, dass die Streustruktur der eigentlichen lichtbeeinflussenden Geometrie, also im vorliegenden Fall der Krümmung der Bodenfläche 31 überlagert ist und dieser folgt.

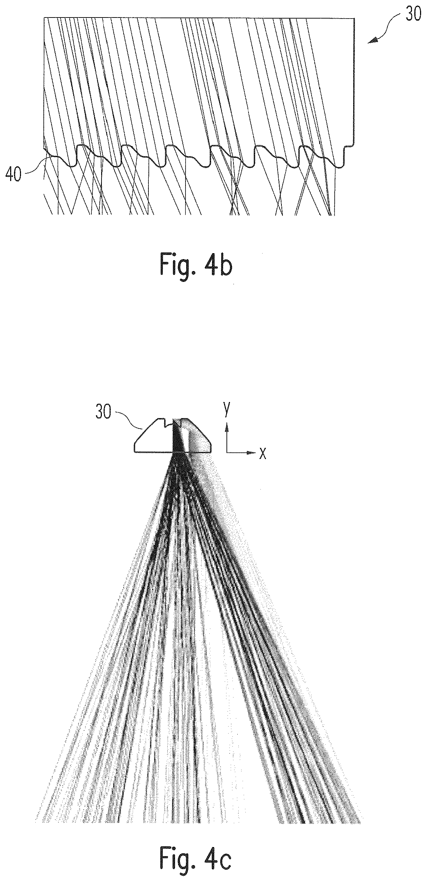

Eine vierte Möglichkeit zur Nutzung der erfindungsgemäßen Strukturierung ist schließlich in den Figuren 4a bis 4c dargestellt. Wiederum kommt die Strukturierung 40 bei einer Linse 30 zum Einsatz, die hinsichtlich ihres Aufbaus der aus dem Stand der Technik bekannten Linse gemäß Figur 6 entspricht. Die Strukturierung 40 ist dabei wiederum an der Unterseite, also der Lichtaustrittsfläche der Linse 30 ausgebildet. Der vergrößerten Darstellung eines Teilabschnitts der Lichtaustrittsfläche in Figur 4b kann dabei entnommen werden, dass die grundsätzliche Geometrie der Lichtaustrittsfläche im Schnitt einer sägezahnartigen Struktur folgt, wobei diese sägezahnartige Struktur nunmehr jedoch wiederum mit einer leicht wellenartigen Struktur überlagert ist. Eine derartige Gestaltung der Lichtaustrittsfläche kann einerseits dadurch erzielt werden, dass zunächst in herkömmlicher Weise, also bspw. durch mechanisches Bearbeiten des Spritzgusswerkzeugs die Sägezahnform festgelegt wird, anschließend jedoch in der oben beschriebenen erfindungsgemäßen Weise diese in klassischer Weise hergestellte Sägezahnform durch thermisches Bearbeiten zu der letztendlich erzielten Oberflächengestaltung umgeformt wird. Alternativ hierzu wäre es auch denkbar, die dargestellte Sägezahnstruktur ausschließlich durch thermisches Umformen einer zunächst ebenen Oberfläche der Optik bzw. des Werkzeugs zu erzielen. Grundsätzlich kann nämlich mit Hilfe des oben beschriebenen erfindungsgemäßen Verfahrens jegliche Struktur realisiert werden, die durch eine mathematische Gleichung beschreibbar ist. Die dargestellte Sägezahnform wäre dann bspw. durch das Überlagern mehrerer entsprechend ausgeführter Grundgeometrien, also bspw. durch das Überlagern mehrerer sinusförmiger Funktionen realisierbar. Auch die Überlagerung z.B. einer nicht-stetigen Grundgeometrie mit einer stetigen Struktur wäre gemäß der Erfindung denkbar, solange diese Überlagerung insgesamt wiederum zu einer stetigen Oberflächenstrukturierung führt.

Unabhängig davon jedoch, in welcher Art und Weise die Oberflächengestaltung erzielt wird, ergibt sich jedoch eine stetige und differenzierbare Oberflächenform, welche zu den eingangs beschriebenen Vorteilen hinsichtlich der besseren Kontrollierbarkeit der Lichtabgabe führt. Die darstellte Sägezahnform hat darüber hinaus den Effekt, dass - wie bspw. die Strahlenverläufe des vergrößerten Abschnitts in Figur 4b zeigen - Licht stärker seitlich abgelenkt wird, was bspw. zum Erzielen einer für einen sog. Wallwasher vorteilhaften Lichtabstrahlcharakeristik durchaus gewünscht sein kann. Diese seitliche Ablenkung wird zusätzlich jedoch durch die wellenartige Strukturierung dahingehend optimiert, dass - wie die Strahlenverläufe der Figur 4a, insbesondere jedoch der Figur 4c zeigen - wiederum eine bessere Durchmischung des Lichts, welches in unterschiedlichen Bereichen die Linse 30 verlässt, vorliegt. D.h., dass trotz der gezielten Ablenkung eines größeren Anteils des Lichts zur Seite hin die jeweiligen unterschiedlich stark beleuchteten Bereiche homogen ausgeleuchtet werden und insbesondere keine Farbunterschiede aufweisen.

Letztendlich können also mit Hilfe der erfindungsgemäßen Lösung sowohl die Effizienz als auch die Lichtabstrahleigenschaft eines optischen Elements optimiert werden.

## Patentansprüche

1. Optisches Element (10, 30) zur Beeinflussung der Lichtabgabe von Leuchtmitteln, insbesondere zur Beeinflussung der Lichtabgabe einer oder mehrerer LEDs (200), wobei das optische Element (10, 30) aus einem lichtdurchlässigen Material besteht und zumindest einen Oberflächenbereich (12, 33, 35) aufweist, der als lichtbrechende Lichteintrittsfläche oder Lichtaustrittsfläche des optischen Elements (10, 30) dient und der eine nicht-ebene, lichtlenkende Geometrie aufweist,
wobei der Oberflächenbereich (12, 33, 35) eine der lichtlenkenden Geometrie folgende Struktur (20, 40) aufweist, welche durch thermisches Bearbeiten, insbesondere durch thermisches Umformen des optischen Elements (10,30) oder eines zur Herstellung des optischen Elements (10, 30) verwendeten Werkzeugs mit entsprechender Formgebung, z.B. eines Spritzgießwerkzeugs erstellt wurde,
**dadurch gekennzeichnet,**
**dass** die Struktur (20, 40) des Oberflächenbereichs (12, 33, 35) entlang einer ersten Richtung eine stetige und differenzierbare wellenartige Form aufweist, welche Erhebungen mit einer Höhe (h) im Bereich von etwa 5-100µm aufweist.

2. Optisches Element nach Anspruch 1,
**dadurch gekennzeichnet,**
**dass** die lichtbrechende Fläche eine Krümmung aufweist.

3. Optisches Element nach Anspruch 1,
**dadurch gekennzeichnet,**
**dass** die lichtlenkende Geometrie durch eine prismenartige Struktur (38) gebildet ist.

4. Optisches Element nach einem der vorherigen Ansprüche,
**dadurch gekennzeichnet,**
**dass** die Struktur (20, 40) durch zwei überlagerte stetige, insbesondere stetige und differenzierbare wellenartige Strukturen gebildet ist, welche vorzugsweise im Wesentlichen senkrecht zueinander ausgebildet sind.

5. Optisches Element nach einem der vorherigen Ansprüche,
**dadurch gekennzeichnet,**
das die Struktur sägezahnartig ausgebildet ist bzw. einer sägezahnartig ausgebildeten Geometrie folgt.

6. Optisches Element nach einem der vorherigen Ansprüche,
**dadurch gekennzeichnet,**
**dass** die wellenartige Struktur (20, 40) eine Wellenlänge (λ) im Bereich von etwa 50-500µm aufweist.

7. Optisches Element nach einem der vorherigen Ansprüche,
**dadurch gekennzeichnet,**
**dass** die Struktur (20, 40) durch eine mathematische Gleichung beschreibbar ist, vorzugsweise durch eine Überlagerung mehrerer Grundgeometrien wie z.B. mehrerer sinus-förmiger Funktionen beschreibbar ist.

8. Optisches Element nach einem der vorherigen Ansprüche,
**dadurch gekennzeichnet,**
**dass** die lichtlenkende Geometrie nichtstetig ist, die Überlagerung durch die Strukturierung insgesamt jedoch zu einer stetigen Oberfläche des optischen Elements führt.

9. Optisches Element nach einem der vorherigen Ansprüche,
**dadurch gekennzeichnet,**
**dass** dieses aus einem glasklaren Material, vorzugsweise aus Kunststoff, Glas oder Silikon gebildet ist.

10. Optisches Element nach einem der vorherigen Ansprüche,
**dadurch gekennzeichnet,**
**dass** es sich um eine Linse handelt.

11. Optisches Element nach einem der vorherigen Ansprüche,
**dadurch gekennzeichnet,**
**dass** die Struktur (20, 40) durch Umschmelzen des optischen Elements (10, 30) oder eines zur Herstellung des optischen Elements (10, 30) verwendeten Werkzeugs mit Hilfe eines Lasers erstellt wurde.

12. Anordnung zur Lichtabgabe mit Leuchtmitteln sowie einem optischen Element (10, 30) zur Beeinflussung der Lichtabgabe,
wobei das optische Element (10, 30) gemäß einem der vorherigen Ansprüche ausgebildet ist.

13. Werkzeug mit entsprechender Formgebung zum Erstellen eines optischen Elements (10, 30) zur Beeinflussung der Lichtabgabe von Leuchtmitteln, insbesondere Spritzgießwerkzeug,
wobei das Werkzeug einen Oberflächenbereich aufweist, der zum Bilden einer lichtbrechenden Lichteintrittsfläche oder Lichtaustrittsfläche des optischen Elements (10, 30) mit einer nicht-ebenen, lichtlenkenden Geometrie vorgesehen ist,
und wobei der Oberflächenbereich des Werkzeugs mit einer der lichtlenkenden Geometrie folgenden Struktur versehen ist, welche durch thermisches Bearbeiten, insbesondere durch thermisches Umformen des Werkzeugs erstellt wurde,
wobei die Struktur (20, 40) des Oberflächenbereichs (12, 33, 35) entlang einer ersten Richtung eine stetige und differenzierbare wellenartige Form aufweist, welche Erhebungen mit einer Höhe (h) im Bereich von etwa 5-100µm aufweist.

14. Verfahren zum Erstellen eines optischen Elements (10, 30) zur Beeinflussung der Lichtabgabe von Leuchtmitteln,
wobei das optische Element (10, 30) aus einem lichtdurchlässigen Material besteht und zumindest einen Oberflächenbereich (12, 33, 35) aufweist, der als lichtbrechende Lichteintrittsfläche oder Lichtaustrittsfläche des optischen Elements (10, 30) dient und der eine nicht-ebene, lichtlenkende Geometrie aufweist,
**dadurch gekennzeichnet,**
**dass** der Oberflächenbereich (12, 33, 35) durch thermisches Umformen mit einer der lichtlenkenden Geometrie folgenden Struktur (20, 40) versehen wird,
wobei die Struktur (20, 40) des Oberflächenbereichs (12, 33, 35) entlang einer ersten Richtung eine stetige und differenzierbare wellenartige Form aufweist, welche Erhebungen mit einer Höhe (h) im Bereich von etwa 5-100µm aufweist.

15. Verfahren zum Erstellen eines optischen Elements (10, 30) zur Beeinflussung der Lichtabgabe von Leuchtmitteln,
wobei das optische Element (10, 30) aus einem lichtdurchlässigen Material besteht und zumindest einen Oberflächenbereich (12, 33, 35) aufweist, der als lichtbrechende Lichteintrittsfläche oder Lichtaustrittsfläche des optischen Elements (10, 30) dient und der eine nicht-ebene, lichtlenkende Geometrie aufweist,
**dadurch gekennzeichnet,**
**dass** das optische Element (10, 30) durch Spritzgießen erstellt wird und die dem Oberflächenbereich (12, 33, 35) entsprechende Oberfläche des Spritzgießwerkzeugs mit einer der lichtlenkenden Geometrie folgenden Struktur versehen ist, welche durch thermisches Bearbeiten, insbesondere durch thermisches Umformen erstellt wurde,
wobei die Struktur (20, 40) des Oberflächenbereichs (12, 33, 35) entlang einer ersten Richtung eine stetige und differenzierbare wellenartige Form aufweist, welche Erhebungen mit einer Höhe (h) im Bereich von etwa 5-100µm aufweist.

## Claims

1. Optical element (10, 30) for influencing the light output of lighting means, in particular for influencing the light output of one or more LEDs (200), wherein the optical element (10, 30) consists of a light-transmissive material and comprises at least one surface region (12, 33, 35) which serves as a light-refracting light entry surface or light exit surface of the optical element (10, 30) and comprises a non-planar light-directing geometry, wherein the surface region (12, 33, 35) comprises a structure (20, 40) which follows the light-directing geometry and was created by thermal processing, in particular by thermal reshaping of the optical element (10, 30) or a tool used for producing the optical element (10, 30) with corresponding shaping, e.g. an injection molding tool,
**characterized in that**
the structure (20, 40) of the surface region (12, 33, 35) along a first direction has a continuous and differentiable wave-like shape comprising elevations with a height (h) in the range of about 5-100 µm.

2. Optical element according to Claim 1,
**characterized in that**
the light-refracting surface has a curvature.

3. Optical element according to Claim 1,
**characterized in that**
the light-directing geometry is formed by a prism-like structure (38) .

4. Optical element according to any one of the preceding claims,
**characterized in that**
the structure (20, 40) is formed by two superposed continuous, in particular continuous and differentiable, wave-like structures, which are preferably substantially perpendicular to one another.

5. Optical element according to any one of the preceding claims,
**characterized in that**
the structure is sawtooth-shaped or follows a sawtooth-shaped geometry.

6. Optical element according to any one of the preceding claims,
**characterized in that**
the wave-like structure (20, 40) has a wavelength (λ) in the range of about 50-500 µm.

7. Optical element according to any one of the preceding claims,
**characterized in that**
the structure (20, 40) can be described by a mathematical equation, preferably by superposing a plurality of basic geometries such as a plurality of sinusoidal functions.

8. Optical element according to any one of the preceding claims,
**characterized in that**
the light-directing geometry is non-continuous, but the superposition by the structuring leads overall to a continuous surface of the optical element.

9. Optical element according to any one of the preceding claims,
**characterized in that**
it is made of a crystal-clear material, preferably plastic, glass or silicone.

10. Optical element according to any one of the preceding claims,
**characterized in that**
it is a lens.

11. Optical element according to any one of the preceding claims,
**characterized in that**
the structure (20, 40) was created by remelting the optical element (10, 30) or a tool used for producing the optical element (10, 30) with the aid of a laser.

12. Arrangement for emitting light comprising lighting means and an optical element (10, 30) for influencing the light output, wherein the optical element (10, 30) is configured according to any one of the preceding claims.

13. Tool having an appropriate shape for creating an optical element (10, 30) for influencing the light output of lighting means, in particular an injection molding tool,
wherein the tool comprises a surface region which is provided for forming a light-refracting light entry surface or light exit surface of the optical element (10, 30) comprising a non-planar light-directing geometry,
and wherein the surface region of the tool is provided with a structure which follows the light-directing geometry and was created by thermal processing, in particular by thermal reshaping of the tool,
wherein the structure (20, 40) of the surface region (12, 33, 35) along a first direction has a continuous and differentiable wave-like shape comprising elevations with a height (h) in the range of about 5-100 µm.

14. Method for creating an optical element (10, 30) for influencing the light output of lighting means,
wherein the optical element (10, 30) consists of a light-transmissive material and comprises at least one surface region (12, 33, 35) which serves as a light-refracting light entry surface or light exit surface of the optical element (10, 30) and comprises a non-planar light-directing geometry,
**characterized in that**
the surface region (12, 33, 35) is provided with a structure (20, 40) which follows the light-directing geometry by thermal reshaping,
wherein the structure (20, 40) of the surface region (12, 33, 35) along a first direction has a continuous and differentiable wave-like shape comprising elevations with a height (h) in the range of about 5-100 µm.

15. Method for creating an optical element (10, 30) for influencing the light output of lighting means,
wherein the optical element (10, 30) consists of a light-transmissive material and comprises at least one surface region (12, 33, 35) which serves as a light-refracting light entry surface or light exit surface of the optical element (10, 30) and comprises a non-planar light-directing geometry,
**characterized in that**
the optical element (10, 30) is created by injection molding and the surface of the injection molding tool corresponding to the surface region (12, 33, 35) is provided with a structure which follows the light-directing geometry and was created by thermal processing, in particular by thermal reshaping,
wherein the structure (20, 40) of the surface region (12, 33, 35) along a first direction has a continuous and differentiable wave-like shape comprising elevations with a height (h) in the range of about 5-100 µm.

## Revendications

1. Élément optique (10, 30) destiné à influer sur l'émission de lumière de sources lumineuses, notamment d'une ou plusieurs LED (200), ledit élément optique (10, 30) se composant d'un matériau translucide et présentant au moins une zone de surface (12, 33, 35) qui sert de surface d'entrée ou de sortie de lumière réfringente de l'élément optique (10, 30) et qui présente une géométrie non plane défléchissant la lumière,
ladite zone de surface (12, 33, 35) présentant une structure (20, 40) qui suit la géométrie défléchissant la lumière et réalisée par façonnage thermique, notamment par thermoformage de l'élément optique (10, 30) ou d'un outil qui sert à la fabrication de l'élément optique (10, 30) et qui est doté d'une configuration appropriée, par ex. un outil de moulage par injection,
**caractérisé en ce que**
la structure (20, 40) de la zone de surface (12, 33, 35) présente une forme ondulée régulière et différenciable, dans une première direction, laquelle présente des renflements d'une hauteur (h) entre environ 5 et 100 µm.

2. Élément optique selon la revendication 1,
**caractérisé en ce que**
la surface réfringente présente une courbure.

3. Élément optique selon la revendication 1,
**caractérisé en ce que**
la géométrie défléchissant la lumière est formée par une structure (38) de type prismatique.

4. Élément optique selon l'une des revendications précédentes,
**caractérisé en ce que**
la structure (20, 40) est formée par la superposition de deux structures ondulées régulières, notamment régulières et différenciables, de préférence formées perpendiculairement l'une par rapport à l'autre.

5. Élément optique selon l'une des revendications précédentes,
**caractérisé en ce que**
la structure est formée en dents de scie ou suit une géométrie en dents de scie.

6. Élément optique selon l'une des revendications précédentes,
**caractérisé en ce que**
la structure ondulée (20, 40) présente une longueur d'onde (λ) située dans une plage d'environ 50 à 500 µm.

7. Élément optique selon l'une des revendications précédentes,
**caractérisé en ce que**
la structure (20, 40) peut être décrite par une équation mathématique, de préférence par une superposition de plusieurs géométries de base, par ex. plusieurs fonctions sinusoïdales.

8. Élément optique selon l'une des revendications précédentes,
**caractérisé en ce que**
la géométrie défléchissant la lumière n'est pas régulière, mais la superposition, de par l'aspect structuré, conduit toutefois à une surface globalement régulière de l'élément optique.

9. Élément optique selon l'une des revendications précédentes,
**caractérisé en ce que**
celui-ci se compose d'un matériau transparent, de préférence en plastique, en verre ou en silicone.

10. Élément optique selon l'une des revendications précédentes,
**caractérisé en ce que**
ledit élément est une lentille.

11. Élément optique selon l'une des revendications précédentes,
**caractérisé en ce que**
la structure (20, 40) est réalisée par fusion de l'élément optique (10, 30) ou d'un outil servant à la fabrication de l'élément optique (10, 30) au moyen d'un laser.

12. Dispositif d'émission de lumière doté de sources lumineuses et d'un élément optique (10, 30) destiné à influer sur l'émission de lumière,
dans lequel l'élément optique (10, 30) est conçu selon l'une des revendications précédentes.

13. Outil présentant une configuration appropriée pour la réalisation d'un élément optique (10, 30) destiné à influer sur l'émission de lumière de sources lumineuses, notamment outil de moulage par injection,
ledit outil présentant une zone de surface prévue pour former une surface d'entrée ou de sortie de lumière de l'élément optique (10, 30) réfringente de la lumière, présentant une géométrie non plane et défléchissant la lumière,
et ladite zone de surface de l'outil étant dotée d'une structure suivant la géométrie défléchissant la lumière et réalisée par façonnage thermique, notamment par thermoformage de l'outil, ladite structure (20, 40) de la zone de surface (12, 33, 35) présentant une forme ondulée régulière et différenciable, dans une première direction, laquelle présente des renflements d'une hauteur (h) située dans une plage d'environ 5 à 100 µm.

14. Procédé de réalisation d'un élément optique (10, 30) destiné à influer sur l'émission de lumière de sources lumineuses,
dans lequel l'élément optique (10, 30) se compose d'un matériau translucide et présente au moins une zone de surface (12, 33, 35) qui sert de surface d'entrée ou de sortie de lumière réfringente de l'élément optique (10, 30) et qui présente une géométrie non plane défléchissant la lumière,
**caractérisé en ce que**
la zone de surface (12, 33, 35) est dotée, par thermoformage, d'une structure (20, 40) qui suit la géométrie défléchissant la lumière, ladite structure (20, 40) de la zone de surface (12, 33, 35) présentant une forme ondulée régulière et différenciable, dans une première direction, laquelle présente des renflements d'une hauteur (h) située dans une plage d'environ 5 à 100 µm.

15. Procédé de réalisation d'un élément optique (10, 30) destiné à influer sur l'émission de lumière de sources lumineuses,
dans lequel l'élément optique (10, 30) se compose d'un matériau translucide et présente au moins une zone de surface (12, 33, 35) qui sert de surface d'entrée ou de sortie de lumière réfringente de l'élément optique (10, 30) et qui présente une géométrie non plane défléchissant la lumière,
**caractérisé en ce que**
l'élément optique (10, 30) est réalisé par moulage par injection et la surface de l'outil de moulage par injection correspondant à la zone de surface (12, 33, 35) est dotée d'une structure qui suit la géométrie défléchissant la lumière et réalisée par façonnage thermique, notamment par thermoformage,
ladite structure (20, 40) de la zone de surface (12, 33, 35) présentant une forme ondulée régulière et différenciable, dans une première direction, laquelle présente des renflements d'une hauteur (h) située dans une plage d'environ 5 à 100 µm
